# EUROPÄISCHE PATENTSCHRIFT

(11) **EP 2 828 578 B1**
(45) Veröffentlichungstag und Bekanntmachung des Hinweises auf die Patenterteilung: **25.05.2016**
(21) Anmeldenummer: 13723193.2
(22) Anmeldetag: 19.03.2013
(51) Int. Cl.: F23G 5/027, F23G 5/20

(54) **VORRICHTUNG UND VERFAHREN ZUM BESEITIGEN VON FESTEM HAUSHALTSABFALL DURCH HOCHTEMPERATUR-PYROLYSE UNTER VERWENDUNG VON SOLARSTRAHLUNG**
DEVICE AND METHOD FOR DISPOSING OF SOLID DOMESTIC WASTE BY MEANS OF HIGH-TEMPERATURE PYROLYSIS, USING SOLAR RADIATION
DISPOSITIF ET PROCÉDÉ D'ÉLIMINATION DE DÉCHETS MÉNAGERS SOLIDES PAR PYROLYSE À HAUTE TEMPÉRATURE À L'AIDE DU RAYONNEMENT SOLAIRE

(30) Priorität: 19.03.2012 RU 2012110797
(43) Veröffentlichungstag der Anmeldung: 28.01.2015
(73) Patentinhaber: Doudenkov, Igor A., 1202 Genf (CH); Rylov, Juliy M., 690002 g. Vladivostok (RU)
(72) Erfinder: RYLOV, Juliy M., 690002 g. Vladivostok (RU)
(74) Vertreter: Jeck, Anton
(86) Internationale Anmeldenummer: PCT/IB2013/000417
(87) Internationale Veröffentlichungsnummer: WO 2013/140225

(56) Entgegenhaltungen:
- CH-A5- 692 927
- US-A- 4 415 339
- US-A1- 2011 315 539

## Beschreibung

Die Erfindung bezieht sich auf ökologische Verfahren und Vorrichtungen für das Beseitigen von festem Haushaltsmüll ("solid domestic waste", kurz SDW) und Abwasserschlammrest ohne Exposition gegenüber Sauerstoff. Es kommt zu keiner Abfallverbrennung: Das Verfahren führt zu einer Molekülzersetzung ("Cracking"). Verbrennbare Erzeugnisse werden thermisch zersetzt (Pyrolyse).

Folgende Verfahren der SDW-Verbrennung sind bekannt:
Verbrennung über eine Rostbefeuerung bei 600-900 °C.

In diesem Fall bleiben bis zu 30 % des sekundären Festabfalls, der mit hoch toxischen Substanzen kontaminiert ist, intakt und benötigen eine spezielle Einlagerung. Unter den Bedingungen von langsamer Erhitzung und Abfallverbrennung bei dieser Temperatur findet eine intensive Dioxinbildung statt.

Der Abfall wird in einer zirkulierenden belüfteten Schicht verbrannt. Dieses Verfahren löst nicht das Problem der Entsorgung der Abfallprodukte, insbesondere der Flugasche.

Die Technologien der vorausgehenden Pyrolyse und nachfolgenden Hochtemperaturverbrennung benötigen einen hundertfachen Überschuss an flüssiger Schlacke in dem Bad, um eine umfassende Zerstörung des organischen Anteils des Abfalls mittels Hitzeschocks zu bewirken. Das Verhältnis von flüssiger Schlacke zu dem belasteten Abfall sollte auf einem Niveau von 100 Tonnen zu 1 Tonne des belasteten Rohmaterials gehalten werden. In diesem Fall wird der beschleunigte Reaktionsprozess in einem großen Volumen durch die Erhöhung der SDW-Kontaktfläche beibehalten, und als Folge erkaltet die Schlacke nicht und behält ihre katalytische Reaktivität bei.

Im Laufe der letzten Jahre hat die Europäische Kommission den Betrieb eines Pyrolyse-Netzwerks finanziert, das Wissenschaftler aus dem Gebiet der schnellen Pyrolyse in verschiedenen Ländern vernetzt hat. Jedoch wurde bisher der beste Ansatz noch nicht gefunden.

Das Patent RU 2122155 kommt der vorgeschlagenen Erfindung am nächsten und bezieht sich auf die Verbrennung von festem Haushaltsabfall. Der wichtigste Nachteil der oben erwähnten Techniken ist die Gegenwart eines Oxidationsmittels bei Verbrennungen zu verschiedenen Stadien der Prozesse, das eine vollständige Zersetzung der Dioxine und Furane in dem verbrannten Material nicht erlaubt. Die Umsetzung der Vorteile der Pyrolyse ist nur mittels elektrischer Beheizung möglich, was zu hohen Kosten für elektrische Energie führt.

Wichtige Informationen zum Stand der Technik liefern auch das Patent der russischen Föderation Nr. 2122155 C1, das Patent der russischen Föderation Nr. 2249766 C2, das Patent der russischen Föderation Nr. 2442082, das Patent der russischen Föderation Nr. 2300058, das Patent 2133415, die Erfindungsanmeldung Nr. 2005125937/06 (029124) vom 15 August 2005 (Einrichtungen der Vereinigung für wissenschaftliche Produktion "Sonnenphysik", Review des Physikalisch-technischen Instituts der Russischen Akademie der Wissenschaften) und das Deutsche Patent Nr. 20 2011 103511.9.

US 2011/315539 A1 offenbart eine Vorrichtung zur Pyrolyse von festen Abfällen mit Sonnenenergie, umfassend eine Vorrichtung zum kontinuierlichen Zuführen von Abfall in einen Ofen, eine Drainagevorrichtung zum Entfernen des zersetzten Abfalls und einen Lichtleiter, der Sonnenstrahlung in den Ofen einführt.

Die Veröffentlichung "Sonnenphysik", die ein Review des Physikalisch-technischen Instituts der Russischen Akademie der Wissenschaften ist, ist ebenfalls bekannt.

Die vorgeschlagene Erfindung beseitigt die oben beschriebenen Nachteile des Stands der Technik. Anders als bei den bekannten Verfahren schließt dieser Ansatz Sauerstoff in allen Schritten der SDW-Zersetzung vollständig aus, und die Zerstörung der hitzeresistenten organischen Chlorverbindungen findet bei 1300 °C oder höheren Temperaturen statt.

Die Erfindung wird anhand der Zeichnungen schematisch dargestellt. Es zeigen:
- Fig. 1: eine allgemeine Ansicht der vorgeschlagenen Vorrichtung,
- Fig. 2: einen Querschnitt des Drehofens und des Silos und
- Fig. 3: die Transmission des Lichtstroms aus dem parabolzylindrischen Konzentrator der ersten Stufe in den parabolzylindrischen Lichtleiter-Konzentrator bei dem Winkel der totalen internen Reflexion.

Die Erfindung betrifft eine Vorrichtung zur Pyrolyse von festen Abfällen mit Sonnenenergie bei 1500 -1600 °C, umfassend
a) einen Drehofen in einem leckdichten Aufnahmegehäuse,
b eine Vorrichtung zum kontinuierlichen Zuführen von Abfall in den Drehofen an einem ersten Ende des Drehofens, wobei die Vorrichtung zum kontinuierlichen Zuführen von Abfall in den Drehofen die Zufuhr von Sauerstoff unterbindet,
c) eine Drainagevorrichtung am zweiten Ende des Drehofens zum Entfernen des zersetzten Abfalls, die zu einem Präzipitationstank führt,
d) ein Gasentzugssystem im Aufnahmegehäuse, das mit dem Präzipitationstank durch eine Leitung verbunden ist und
e) einen Lichtleiter, der Sonnenstrahlung in den Drehofen am zweiten Ende des Drehofens führt.

Die Temperatur im Ofen kann auch 1540 °C bis 1580 °C oder ungefähr 1500 °C, 1550 °C oder 1600 °C betragen.

"Ungefähr" im Sinne der Erfindung bedeutet eine Abweichung um +/-10 °C.

Leckdicht im Sinne der Erfindung bedeutet, dass weder Gas noch Flüssigkeit bei den angegebenen Betriebstemperaturen aus dem Gehäuse entweichen können.

Ein Präzipitationstank im Sinne der Erfindung ist ein Aufnahmebehälter oder ein Sammelbehälter für die entstehende Schlacke.

Ein Gasentzugssystem im Sinne der Erfindung ist jede Vorrichtung, die Gase optional nach Filtration in einem Röhrensystem befördern kann. Vorzugsweise handelt es sich um Ventilatoren.

An den Präzipitationstank kann eine weitere Leitung oder Pipeline angeschlossen sein, die die Schlacke aus dem Präzipitationstank weiterbefördert.

Ein Lichtleiter im Sinne der Erfindung ist jeder Leiter, der geeignet ist, auch Licht mit hoher Intensität weitestgehend ohne Verluste zu übertragen. Die Lichtleiter können massiv oder hohl sein.

Lichtleiter sind vorzugsweise aus einem Material, das der Hitze im Innern des Ofens widersteht, wie einem hitzefesten Glas.

In einer Ausführungsform ist die Vorrichtung zum kontinuierlichen Zuführen von Abfall in den Drehofen eine Schnecke, die den zugeführten Abfall während des Transportvorgangs zu einem luftundurchlässigen Pfropfen verdichtet, insbesondere eine Schnecke mit diskontinuierlichen Schaufeln.

Andere Formen von Vorrichtungen zum kontinuierlichen Zuführen von Abfall werden auch als umschlossen betrachtet, wie zum Beispiel Schrauben oder Transportbänder mit einem Schleusensystem. Die Schnecke kann auch miteinander verbundene Flügel aufweisen.

Der Abfall der über die Vorrichtungen zum kontinuierlichen Zuführen von Abfall in den Drehofen transportiert werden kann, kann in einem Silo bereitgestellt werden. Ein Silo im Sinne der Erfindung ist ein Vorratsbehälter zum Bereitstellen des Abfalls vor dem Weitertransport.

Die gesamte Vorrichtung der Erfindung, soweit sie in direkten Kontakt mit dem Abfall kommt, kann leckdicht sein, um eine maximale Abschottung vom Sauerstoff zu erreichen. Entsprechend müssen die Kollektoren natürlich nicht leckdicht sein, sofern der Teil des Lichtleiters, der sich im Drehofen befindet, in einer geeigneten Weise ebenfalls keinen Kontakt zu Sauerstoff besitzt.

In einer Ausführungsform enthält der Drehofen eine hitzefeste Beschichtung und/oder eine Infrarotstrahlung reflektierende Schicht.

Es sind verschiedene hitzefeste Beschichtungen bekannt wie Keramikfasern, Keramiksteine, hitzestabile Nicht-Keramiksteine. Infrarotstrahlung reflektierende Schichten können aus Material mit reflektierenden Oberflächen, wie poliertem oder behandeltem Stahl oder geeigneten Polymeren oder Fasern bestehen.

In einer Ausführungsform enthält das Innere des Drehofens von innen nach außen eine Schicht aus feuerfestem Stein, eine Schicht aus einem Hochtemperatur-Isoliermaterial und eine Schicht aus poliertem, Infrarotstrahlen reflektierendem, rostfreiem Strahl. Diese letzte Schicht liegt direkt an dem Unterbau (Karkasse) des Ofens an.

In einer Ausführungsform enthält der Drehofen zwei gegenüberliegende oder drei, vier, fünf oder mehr Drainageöffnungen.

In einer Ausführungsform enthält die Vorrichtung zusätzlich eine Bank von Sonnenkollektoren, die über den Lichtleiter Solarstrahlung in den Drehofen führen.

Eine Bank umfasst mindestens oder genau 2, 3, 4, 5, 6, 7, 8, 9, oder 10 Sonnenkollektoren. Die konzentrierte Sonnenstrahlung kann durch Lichtleiter in einem Lichtleiter gebündelt werden. Dieser kann in den Drehofen führen.

Die Sonnenkollektoren können auch als eigenständige Vorrichtung ohne den Drehofen oder andere zusätzliche Vorrichtungen hergestellt und benutzt werden. Diese sind daher ein eigenständiger Aspekt der Erfindung.

In einer Ausführungsform enthalten die Sonnenkollektoren jeweils zwei Stufen von parabolzylindrischen Konzentratoren, wobei die erste Stufe einen parabolzylindrischen Konzentrator für die Aufnahme des Sonnenlichts enthält, und die zweite Stufe ein parabolzylindrischer Lichtleiter-Konzentrator ist, der das in der ersten Stufe konzentrierte Licht aufnimmt.

Der parabolische Konzentrator der ersten Stufe kann ein Sonnennachführungssystem enthalten. Dieses ermöglicht die korrekte Ausrichtung auf die Sonne. Das Sonnennachführungssystem kann softwaregesteuert sein.

In einer Ausführungsform sind die Konzentratoren der ersten und zweiten Stufe so angeordnet, dass die Focusachsen der Konzentratoren der ersten und zweiten Stufe zur Deckung gebracht sind.

In einer Ausführungsform besteht der zylindrische parabolische Lichtleiter-Konzentrator aus zwei optisch transparenten Materialien mit verschiedenen Brechungskoeffizienten n₁ und n₂, mit der Maßgabe, dass n₁ > n₂ ist.

Weitere Angaben zu den Eigenschaften der Sonnenkollektoren der ersten und zweiten Stufe sowie deren Anordnung zueinander finden sich in der eingehenden Beschreibung der Erfindung.

Die Erfindung betrifft auch ein Verfahren zur Pyrolyse von festen Abfällen mit Sonnenenergie in einem sich drehenden Drehofen, enthalten in einem leckdichten Aufnahmegehäuse, in einem kontinuierlichen Prozess umfassend die Schritte:
a) Beschicken des Drehofens mit Abfall aus einem Silo über eine Zuführvorrichtung, die den Zutritt von Sauerstoff in den Ofen unterbindet,
b) Eintreten von konzentrierter Sonnenstrahlung in den Drehofen, die den Abfall auf 1500 - 1600 °C in Abwesenheit von Sauerstoff erhitzt und dadurch zur Pyrolyse des Abfalls und zur Freisetzung von Pyrogas führt,
c) Abführen des pyrolysierten Abfalls als geschmolzene Schlacke in einen Präzipitationsbehälter und
d) Abführen des Pyrogases über ein Gasentzugssystem im leckdichten Aufnahmegehäuse und Hineinpumpen des Pyrogases in die geschmolzene Schlacke.

In einer Ausführungsform umfasst die Sonnenstrahlung sowohl das Spektrum des sichtbaren Lichts als auch des Infrarotlichts und/oder ultraviolette Strahlung.

In einer Ausführungsform umfasst der Abfall Haushaltsabfall oder organischen Abfall. In einer Ausführungsform ist der Abfall feucht. Der Abfall kann ungetrocknet und/oder unzermahlen sein. Vorzugsweise weisen die Partikel des Abfalls eine Größe von 100 - 150 mm auf.

In einer Ausführungsform wird das erzeugte Pyrogas in Kraftwerken ohne Abgabe schädlicher Gase verbrannt. Pyrogas umfasst insbesondere CO und H₂.

In einer Ausführungsform wird das gerade beschriebene Verfahren in der oben beschriebenen Vorrichtung durchgeführt.

Bevorzugte Ausführungsformen für das Verfahren zur Entsorgung von Haushaltsmüll, umfassend eine vorhergehende Pyrolyse gefolgt von Hochtemperaturschock, werden im Folgenden beschrieben.
1. Eine bevorzugte Ausführungsform dieses Verfahrens ist es, dass es konzentrierte Solarenergie aus den sichtbaren und Infrarotspektren der elektromagnetischen Strahlung für die sauerstofffreie thermische Zersetzung verwendet (siehe RU 2442082 und DE 20 2011 103511.9 für das Konzentrationsverfahren). Die Pyrolyseprozesse erfolgen ohne Unterbrechung und ohne Sauerstoffexpositon.
2. Eine weitere Ausführungsform dieses Verfahrens ist, dass der Komplex der parabolzylindrischen Konzentratoren mit dem Sonnennachführungssystem die Quelle der konzentrierten Sonnenstrahlung in der ersten Stufe ist. Später in der zweiten Stufe wird die Intensität der Sonnenstrahlung millionenfach in Lichtleiter-Konzentratoren erhöht. Sie tritt in den Pyrolyseofen über einen Lichtleiter ein.
3. Eine weitere Ausführungsform dieses Verfahrens ist, dass konzentrierte elektromagnetische Solarstrahlung in einen Drehofen eintritt, der mit festem Haushaltsabfall und mineralischem Abfall beschickt wird, der Karbonsäure, Methan, Wasser etc. enthält. Der Abfall bewegt sich von dem Einfüllende weg, während der Ofen rotiert. Während der Prozesszeit absorbiert der Abfall die Solarstrahlung und wird in thermische Energie umgeformt.
4. Eine weitere Ausführungsform dieses Verfahrens ist, dass, während die Temperatur ansteigt, der SDW schmilzt und später evaporiert und sich in Gas umformt. Das Gas wird in dem Aufnahmebehälter gesammelt, herausgepumpt und durch die geschmolzene Schlacke der Pyrolyseprodukte unter Drucküberschuss hindurchgepumpt. Somit sickert das Gas letztlich wegen der katalytischen Zersetzung ein.
   Auf Pyrolyse basierende Abfallentsorgungseinrichtung, bestehend aus Öfen und Kesseln, kann wie folgt gestaltet sein:
5. In einer Ausführungsform dieser Vorrichtung ist der Drehofen für die Pyrolyse von festem Haushaltsabfall in einem lecksicheren Gehäuse (Aufnahmegehäuse) untergebracht. Dieses Gehäuse ist thermisch isoliert und besitzt eine schachtbasierte Einrichtung für den Auslauf der Schlacke in einen lecksicheren Tank für die Abfallzuführung und die Entfernung des Gases. Das Gas bewegt sich dann über eine Pipeline in einen Schlackepräzipitationstank.
6. In einer weiteren Ausführungsform dieser Vorrichtung besitzt der Drehofen eine Schicht zur Reflexion infraroter Strahlung. Sie befindet sich an der Grenze zwischen dem Ofenunterbau und dem Hochtemperatur-Isoliermaterial.

Die Erfindung ermöglicht die Entsorgung von Abfall unter Verwendung von Sonnenenergie. Die folgenden Kapitelüberschriften dienen lediglich dazu, die Inhalte zu ordnen und sollen nicht so verstanden werden, dass einzelne Ausführungsformen nicht miteinander kombinierbar wären oder nur in Kombination möglich wären.

Die Erfindung betrifft insbesondere ein Verfahren zur Entsorgung von festem Haushaltsabfall durch Hochtemperatur-Pyrolyse unter Verwendung von konzentrierter Solarstrahlung und eine Vorrichtung für dessen Umsetzung.

Diese Erfindung ist auf ökologisch saubere Verfahren und die Entsorgung von festem Haushaltsabfall (SDW) und Abwasserschlammrest gerichtet. Das Verfahren und die Vorrichtung erlauben Molekülzersetzung ("Cracking") bei hohen Temperaturen ohne eine Exposition gegenüber Sauerstoff. Die verbrennbaren Produkte werden thermisch zersetzt.

Die Pyrolyse findet ohne Unterbrechung unter dem Einfluss von konzentrierter Sonnenenergie in einem Drehofen statt. Ein hoher Grad an Pyrolyse findet bei Temperaturen über 1400 °C statt. Chloridenthaftende Polymere zersetzen sich; Chlorwasserstoff, das die Quelle für die Dioxinbildung ist, wird an thermostabile Mineralsalze gebunden. Das erzeugte Pyrogas wird in Kraftwerken verbrannt, und es werden keine Dioxinabgase erzeugt.

Das Verfahren für die Verbrennung von Haushaltsabfall und anderem organischen Abfall schließt die Abfallzersetzung über konzentrierte Solarstrahlung ein, die aus einem Lichtleiter aus einer Bank zylindrischer Parabolspiegel stammt, die nahe der Vorrichtung für die SDW-Pyrolyse angeordnet ist. Vorheriges Trocknen und Zermahlen ist nicht notwendig. Das Verfahren benötigt Feuchtigkeit, um die Infrarotstrahlung zu absorbieren und in thermische Energie umzuwandeln.

Die Vorrichtung schließt ein Silo für die Abfallsortierung und Abfallsammlung ein. Der Abfall wird aus dem Silo in den Drehofen über eine Schnecke mit diskontinuierlichen Schaufeln zugeführt. Der Ofen ist eine längliche Trommel und besitzt eine Vorrichtung für die geschmolzene Schlacke, die aus dem Ofen läuft, und für die Filtration der Schmelze in der Schmelze.

Die Hauptabsicht der vorgeschlagenen Erfindung ist es, eine effektive Zersetzung der Dioxine, Furane und des Kohlendioxids zu bewirken, um die Emission von schädlichen Substanzen in die Atmosphäre zu vermeiden. Die Pyrolyseprodukte können ein zweites Mal verwendet werden. Das Verfahren ermöglicht es, Pyrolysegas in die Schlackenschmelze zu blasen, das während des Erhitzens der SDW im Pyrolyseprozess erhalten wurde. Auf diese Weise wird das Pyrolysegas in einem zweiten Schritt einer zusätzlichen katalytischen Zersetzung unterworfen. Das Verfahren ermöglicht das simultane Zuführen von gemischtem Rohmaterial und benötigt keine Abfalltrocknung oder ein Zermahlen des Abfalls.

Die Pyrolyse erfolgt unter dem Einfluss von konzentrierter Sonnenstrahlung in einem Drehofen bei Temperaturen von über 1400 °C. Diese Bedingungen erlauben einen hohen Pyrolysegrad und eine Zersetzung von chloridhaltigen Polymeren; Chlorwasserstoff, das die Ursache für die Dioxinbildung ist, wird an thermostabile Mineralsalze gebunden. Das erzeugte Pyrogas (Synthesegas, CO und H₂ Mischung) wird in Kraftwerken verbrannt, und es werden keine Dioxinabgase erzeugt. Bei diesem Verfahren basiert die Verbrennung von festem Haushaltsabfall und anderem organischen Abfall auf einer thermischen Zersetzung mittels konzentrierter Solarstrahlung, die aus einem Lichtleiter aus einer Bank von zylindrischen Parabolspiegeln, die für die SDW-Pyrolyse bestimmt sind, stammt. Vor dem Einführen in den Drehofen wird der zu verbrennende Abfall auf einem Sieb in separate Feststofffraktionen mit einer Größe von mehr als 100 - 150 mm sortiert. Vorheriges Trocknen und Zermahlen ist nicht notwendig. Das Verfahren benötigt Feuchtigkeit, um Infrarotstrahlung in thermische Energie umzuwandeln. Die Vorrichtung beinhaltet ein Silo für die Abfallsortierung und -sammlung. Aus diesem Silo wird der Abfall in den Drehofen über eine Schnecke mit diskontinuierlichen Schaufeln zugeführt. Der Ofen ist eine längliche Trommel. Sie besitzt eine Vorrichtung für die geschmolzene Schlacke, die aus dem Ofen abläuft und für die Pyrogasfiltration aus der Schmelze. Der Ofen befindet sich innerhalb eines lecksicheren Gehäuses, der das Gas während des SDW-Pyrolyseprozesses sammelt und verteilt.

Das SDW-Entsorgungsverfahren über Pyrolyse und ein Gerät für die Umsetzung dieses Verfahrens arbeiten in folgender Weise:

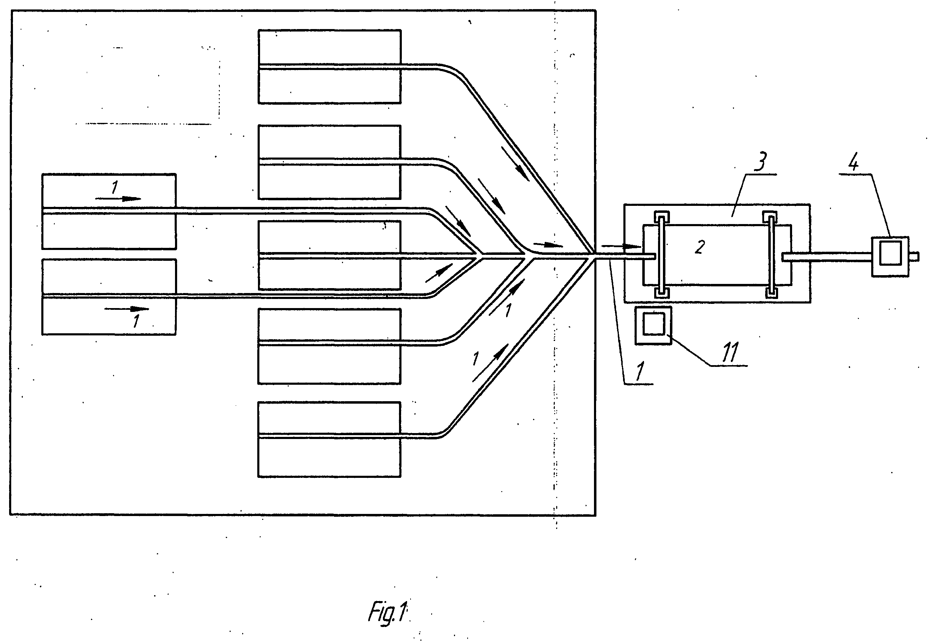

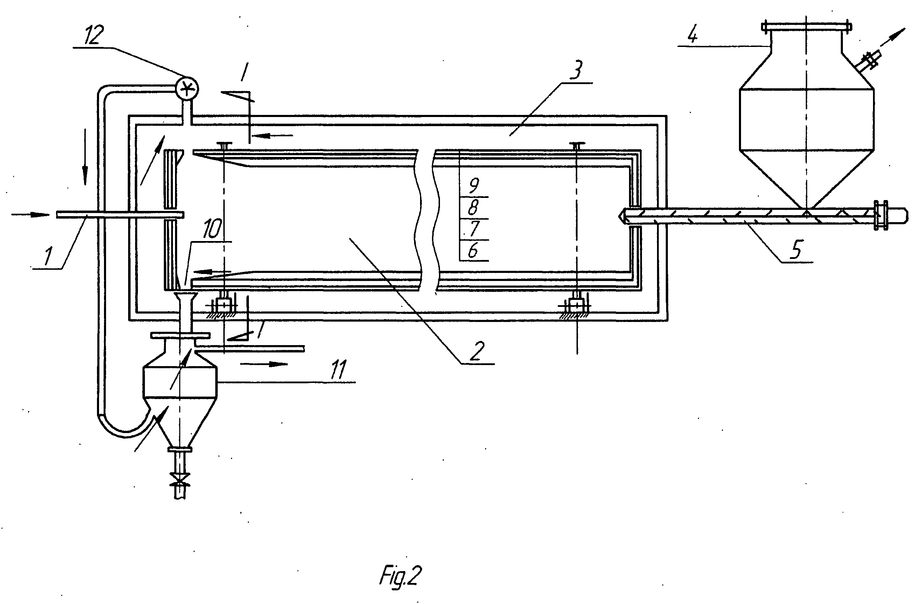

Figur 1 zeigt das Gerät, und Figur 2 zeigt den Längsschnitt eines Teils des Geräts.

Konzentrierte Solarstrahlung gelangt über hohle Lichtleiter 1 mit einem Durchmesser von höchstens 100 mm aus einer Bank von konzentrierenden Sonnenkollektoren in den Drehofen 2, in dem die SDW-Pyrolyse stattfindet. Der Drehofen kann auch als ein schwarzer Körper angesehen werden. Es handelt sich um einen geschlossenen Hohlraum mit einer kleinen Öffnung. Die Solarstrahlung gelangt durch diese Öffnung und wird durch den festen Haushaltsabfall nach zahlreichen Reflexionen absorbiert. Der Ofen befindet sich in einem leckdichten Aufnahmegehäuse 3, der für das Sammeln des Pyrolysegases des ersten Schritts vorgesehen ist.

In den Ofen eingeführtes SDW absorbiert die Energie des Spektrums der Sonnenstrahlung, die aus sichtbarer (49 %), infraroter (49 %) und ultravioletter (1,5 %) Strahlung besteht. Sichtbares Licht wird durch den Abfall absorbiert und in thermische Energie umgewandelt. Die infrarote Strahlung kann nur durch Wasser, Kohlensäure und Methan des SDW absorbiert werden und wird dann ebenfalls in thermische Energie umgewandelt. Der Ofen ist so konstruiert, dass er einen Teil der ultravioletten Strahlungsenergie reflektiert, die während des Pyrolyseprozesses entweichen kann, und führt diese in den Ofen zurück. Konzentrierte ultraviolette Strahlung kann einen positiven Einfluss auf die Entsorgung des SDW haben.

Die Vorrichtung funktioniert in folgender Weise:
Fester Haushaltsabfall, industrieller Abfall und Abwasserschlammreste bewegen sich zu der Sonnenstrahlung aus dem unter Vakuum stehenden Aufnahmesilo 4 über eine Zuführeinrichtung mit Schnecke und diskontinuierlichen Schaufeln 5 zu dem Drehofen 2. Der SDW wird in dem Schneckengehäuse gepresst und bildet einen luftdichten Stopfen. Somit stoppt der Zugang von Luft zu dem Ofen, während der Ofen ohne Unterbrechung beschickt wird. Das Innere des Drehofens ist mit feuerfestem Stein 6 ausgekleidet und mit einem Hochtemperatur-Isoliermaterial aus keramischen Fasern 7 gegen Hitze isoliert. Um den Energieverlust durch Infrarotstrahlung auszuschließen, die nur absorbiert oder reflektiert werden kann, wird eine Schicht an der Grenze zwischen der hitzeisolierenden Schicht 7 und dem Unterbau der Ofentrommel 9 eingesetzt. Diese Schicht besteht aus poliertem, rostfreiem Stahl mit einer Dicke von 0,5 - 1,0 mm (ähnlich wie bei den in Haushalten üblichen Isoliergefäßen) und reflektiert die Infrarotstrahlung.

Die Ausformung der Steinauskleidung ist in einer Weise erstellt, dass sich der SDW von einem Einführende zu einem Entnahmepunkt über Schächte 10 zu Drainageöffnungen 11 in dem Präzipitationstank bewegt, wenn der Ofen sich dreht. Die Drainageöffnungen sind einander gegenüberliegend angeordnet. Unterdessen wird das Gas aus dem Ofen in das Aufnahmegehäuse 3 transportiert. Gas, das im ersten Schritt aus dem Aufnahmegehäuse über ein Gasentzugssystem 12 erhalten wurde, tritt in den Präzipitationstank zur Filtration ein.

Der kontinuierlich arbeitende Ofen erhitzt sich, während die Beschickung mit SDW erfolgt. Wenn der Ofen rotiert, bewegt sich der SDW zu der konzentrierten Sonnenstrahlung. Zahlreiche Faktoren tragen zu der Effizienz der Vorrichtung für das Recyceln von SDW über Pyrolyse bei: die Größe des Platzes für die Vorrichtung, die Anzahl der sonnigen Tage in der Region, die Länge des Röhrenofens, sein Durchmesser, seine Rotationsgeschwindigkeit und die benötigte Fläche von zylindrischen Parabolspiegeln (basierend auf 1 kW eines Quadratmeters Parabolspiegel oder 86000 Kalorien pro Stunde).

Die Ofentemperatur wird bei 1500 - 1600 °C gehalten. Sie trägt zum Schmelzen und zur Verglasung aller mineralischen Abfallkomponenten bei. Die Hochtemperatur-Entsorgung des SDW findet gleichzeitig mit der Produktion von Pyrolysegas statt (Synthesegase, CO und H₂ Mischung). Danach muss das Gas verbrannt werden, um elektrische Energie zu erzeugen. Um die toxischen organischen Verbindungen in den Gasen, die in dem Ofen erzeugt und in dem Aufnahmebehälter 3 gesammelt werden, vollständig zu zerstören, wird das Gas in der zweiten Entsorgungsstufe gefiltert und unter hohem Druck gefiltert (durchgeblasen). Auf diese Weise kann die Erzeugung von gefährlichen und umweltverschmutzenden Gasen, wie Dioxinen und Stickoxiden, ausgeschlossen werden. Die Bedingungen für eine hohe Rate an reiner Pyrolyse werden bei hoher Temperatur geschaffen.

Die Pyrolyseprodukte fallen gemäß ihren spezifischen Gewichten in dem Schlacken-Präzipitationstank aus. Somit werden Konditionen erschaffen, die die Verwendung wertvoller Endprodukte ermöglichen. Es sollte berücksichtigt werden, dass ein Anstieg der Temperatur die Gasausbeute erhöhen und die Mengen an festem Rest vermindern würde.

Die Vorrichtung stellt einen hohen Konzentrierungsgrad zur Verfügung (100fach und mehr) und wird verwendet, um hohe Temperaturen zu erhalten. Sie wird auch für deren Transfer aus dem Wärmeabnehmer über einen Lichtleiter verwendet.

Für gewöhnlich ist die Konzentrierung von Solarenergie auf hohe Temperaturen mit einer einzelnen Reflexion aus einem glatten Reflektor mit nachfolgender Umlenkung des Lichtstroms wegen der signifikanten Verluste, die auftreten, wenn das Licht wiederholt reflektiert und umgelenkt wird, unmöglich. Um diese Verluste zu vermeiden, wird vorgeschlagen, die totale interne Reflexion gemäß den Gesetzen der optischen Geometrie mit einem Energietransfer über einen Lichtleiter zu nutzen.

Zahlreiche optische Verfahren für die Konzentrierung von Solarenergie über Reflexion mit anschließender Konzentrierung durch geometrische Figuren mit einem Generatrix-Fokus zweiter Ordnung sind bekannt (Einrichtungen der Vereinigung für wissenschaftliche Produktion "Sonnenphysik", Review des Physikalisch-technischen Instituts der Russischen Akademie der Wissenschaften).

Spezifische thermale Verluste werden im Fall einer einzelnen Reflexion wegen der Verminderung des Absoptionsaufnahmebereichs ausgeglichen, so dass die Dichte des Solarenergieflusses erhöht wird. Wird jedoch nachfolgend die Anzahl der Strahlreflexionen erhöht, werden die spezifischen Energieverluste wegen der Verminderung des Absoptionsaufnahmebereichs nicht mehr ausgeglichen. Die Dichte des Solarstroms vermindert sich folglich wegen des Energieverlustes, der auftritt, wenn Licht gestreut wird und der Reflektor sich erhitzt.

Das "Photoelektrische Sonnenmodul" (RU Patent 2133415) kommt technisch der vorgeschlagenen Erfindung am nächsten und bezieht sich auf Mittel, bei denen totale interne Reflexion zur Anwendung kommt. Es verwendet die total interne Reflexion des Lichtstroms, die durch ein transparentes Prisma erzeugt wird. Der Lichtstrahl wird gebrochen und trifft auf die kurze Kathete des Prismas. Folgen von parazylindrischen Spiegelkomponenten-Kollektoren dienen als reguläre Reflektor-Konzentratoren. Die Nachteile dieses Verfahrens zur Konzentrierung von Solarenergie sind die Unmöglichkeit, hohe Temperaturen zu erhalten, der geringe Grad der Konzentrierung der Solarenergie und die begrenzten Möglichkeiten bezogen auf den Aufnahmebereich für die Solarenergie.

Die vorgeschlagene Erfindung löst das Problem der Konzentration der Solarenergie auf hohe Temperaturen mit einer einzelnen Reflexion mit einem glatten Reflektor und nachfolgender Umleitung des Solarstrahl-Lichtstroms.

Das Verfahren für die Konzentrierung der Solarenergie mit seiner nachfolgenden Umlenkung beinhaltet in der ersten Stufe einen parabolzylindrischen Konzentrator. Um dieses technische Ergebnis zu erhalten, wird der Reflektor so orientiert, dass der konzentrierte Lichtstrom die Focusachse unter einem extremen Winkel gegenüber dem parabolzylindrischen Lichtleiter-Konzentrator trifft, der aus zwei transparenten Materialien mit verschiedenen Brechungskoeffizienten n₁ und n₂ besteht, mit der Maßgabe, dass n₁ > n₂ ist. Wenn der Lichtstrom reflektiert wird, bewahrt dieser diesen Winkel und wird dann gemäß dem Gesetz von Snell gebrochen.

Gemäß diesem Gesetz wird der Lichtstrom in einem optisch dichteren Medium gebrochen. Sobald der Einfallswinkel einen bestimmten maximalen Brechungswinkel in das weniger dichte Medium überschreitet, stoppt die Brechung. Das Licht beginnt an der Grenzfläche vollständig gebrochen zu werden. Wenn nachfolgend der Einfallswinkel erhöht wird, wird der Wert des Brechungswinkels größer als 90° sein. Dies bedeutet, dass der Strahl nicht aus dem transparenten dielektrischen Medium mit höherer Dichte entkommen kann, sondern in ihm verbleibt, während die Intensität allmählich ansteigt. Somit wird er an der Grenze des weniger dichten Mediums nicht gebrochen, sondern von ihr reflektiert werden. Die Grenzoberfläche dient als ein Spiegel. Somit wird der Lichtstrom des Konzentrators der ersten Stufe in der Focusachse gesammelt. Dann wechselt er seine Richtung bei einem maximalen Reflexionswinkel und wandert entlang der Focusachse. Der Lichtstrom konzentriert sich über die volle Länge des Lichtleiter-Konzentrators und erreicht seinen Maximalwert an dem Ende. Dies war die erste Anforderung an dieses Verfahren. Die zweite Anforderung ist Folgende: Sobald der Lichtstrom auf den parabolzylindrischen Lichtleiter-Konzentrator trifft, sollte er sich gemäß den ersten und zweiten Reflexionseigenschaften von Parabeln verhalten. Die erste Eigenschaft besagt, dass das Licht, das aus einer Punktquelle stammt, am Focus in einen Parallelstrahl reflektiert wird und damit die Parabel parallel zu der Symmetrieachse verlässt. Die zweite Eigenschaft besagt, dass, wenn eine Lichtquelle sich im Focus der Parabel befindet, die Wellenfront, die von der Parabel reflektiert wird, ein Segment ist, das zwei Punkte der Sehne der Parabel verbindet. Sie ist parallel zu der Leitgeraden der Parabel.

Eine der kennzeichnenden Eigenschaften des Verfahrens ist, dass der Lichtstrom aus dem parabolzylindrischen Konzentrator in der ersten Stufe seine Richtung bei einem maximalen Winkel der totalen internen Brechung gegenüber dem zylindrischen Lichtleiter-Konzentrator ändert, der aus einem optisch transparenten Material hergestellt ist. Die Quelle der konzentrierten Solarstrahlung für den Lichtleiter-Konzentrator wird erzeugt, wenn die Focusachse des parabolzylindrischen Konzentrators der ersten Stufe mit der Focusachse des parabolzylindrischen Lichtleiter-Konzentrators zur Deckung gebracht wird. Wenn die Quelle der Solarstrahlung auf die parabolische Oberfläche des Lichtleiter-Konzentrators trifft, wird sie an der Grenzfläche der Medien mit unterschiedlichen Dichten gebrochen. Dann wird sie entlang des Vektors des Lichtstroms über die volle Länge der Focusachse des parabolzylindrischen Lichtleiter-Konzentrators aufsummiert. Schließlich läuft die Quelle der Solarstrahlung parallel der Focusachsen und überträgt Energie über den Lichtleiter auf den Wärmeabnehmer.

Um dieses technische Ergebnis zu erzielen, wird eine bekannte Vorrichtung gemäß der Anmeldung Nr. 2005125937/06 (029124), vorgeschlagen. Sie besteht aus einem parabolzylindrischen Konzentrator der ersten Stufe mit einer Kontrolle zur Sonnennachführung. Die konzentrierte Solarenergie trifft auf den parabolzylindrischen Absorber mit dem zugeordneten Wärmeabnehmer.

Im Gegensatz zu der bekannten Vorrichtung besitzt die hier vorgeschlagene Vorrichtung einen optisch transparenten parabolzylindrischen Lichtleiter-Konzentra-tor. Seine Focusachse überlagert die Focusachse des parabolzylindrischen Konzentrators der ersten Stufe. Der Brennfleck wird nahe an dem Konzentrator der ersten Stufe gebildet und ist gleich der optischen Breite des Lichtstroms des parabolzylindrischen Konzentrators der ersten Stufe, der sich als ein diffuser intensitätserhöhter Lichtstrom darstellt. Die Bildung des Brennflecks kann zahlreiche Gründe haben: Beugung, Interferenz, geringe Qualität der Generatrix der zweiten Ordnung und, wahrscheinlich, Lichtstreuung und Reflexion im Licht selbst. Das vorgeschlagene Verfahren verwendet den gesamten Brennfleck, da das gesamte Solarenergiespektrum in ihm enthalten ist. Und diese Solarenergie erhält ihre Ausrichtung auf den Focus. Die Solarenergie sollte ohne jegliche Verluste für die nachfolgende Konzentrierung mit einer Umlenkung des Lichtstroms gesammelt werden.

Die Vorrichtung zur Konzentrierung von Solarenergie enthält den parabolzylindrischen Konzentrator für Solarenergie in der ersten Stufe mit der Vorrichtung zur Sonnennachführung, der den Lichtstrom bei einem maximalen Winkel leitet.

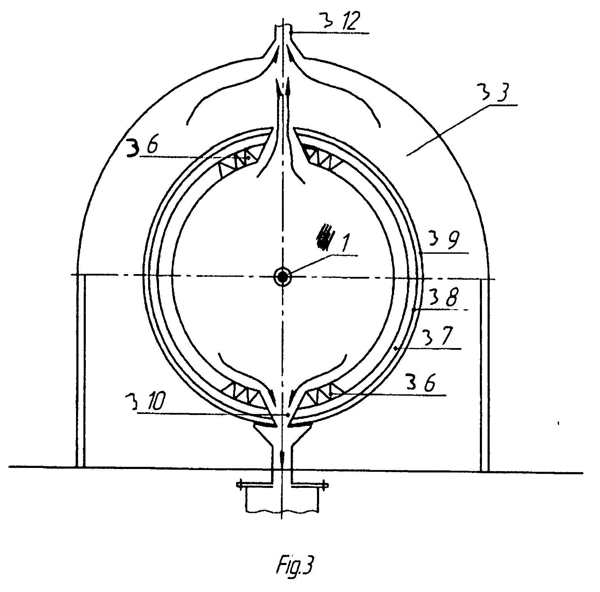

Der zylindrische parabolische Lichtleiter-Konzentrator 36 ist mit Stützen an dem parabolzylindrischen Konzentrator für Solarenergie der ersten Stufe fixiert. Die Focusachse des parabolzylindrischen Lichtleiter-Konzentrators überlagert die Focusachse des parabolzylindrischen Konzentrators der ersten Stufe. Der zylindrische parabolische Konzentrator 36 wurde aus einem optisch transparenten zweischichtigen Material mit verschiedenen Brechungskoeffizienten hergestellt. Das erste Medium 39 (Fig. 3), das den Lichtstrom aus dem parabolzylindrischen Konzentrator der ersten Stufe aufnimmt, ist dichter als das der zweiten Schicht. Die zweite Schicht ist um ein Vielfaches dicker als die erste Schicht. Der zylindrische parabolische Lichtleiter-Konzentrator 36 ist außerhalb der oberen Oberfläche mit der reflektierenden und schützenden Schicht bedeckt. Die gesammelte Lichtenergie wird von dem zylindrischen parabolischen Lichtleiter-Konzentrator 36 (Fig. 3) zur kreisförmigen Sektion des Lichtleiterendes umgeleitet. Wenn der Lichtstrom aus dem parabolzylindrischen Lichtleiter-Konzentrator 36 tritt, wird der Lichtstrom (Fig. 3) zu der kreisförmigen Sektion des Lichtleiters geleitet, und es erfolgt die Ausbreitung durch den Lichtleiter bis zum Wärmeabnehmer ohne Energieverlust.

Die Lichtquelle wird entlang der Focusachsen angeordnet, indem die Focusachsen des parabolzylindrischen Konzentrators der ersten Stufe und des parabolzylindrischen Lichtleiter-Konzentrators 36 überlagert werden. Die Focusachsen besitzen die Länge des parabolzylindrischen Lichtleiter-Konzentrators 36.

Der maximale Winkel hängt von den Unterschieden zwischen den optischen Eigen-schaften der transparenten dielektrischen Materialien des parabolzylindrischen Licht-leiter-Konzentrators 36 ab, aus denen er besteht. Er wird gemäß der Formel sin⁻¹(n₂/n₁) berechnet, was bedeutet, dass, je geringer der Unterschied zwischen n₁ und n₂ ist, desto geringer ist der Einfallswinkel. Dies ist ein wichtiges Detail des Entwurfs der Vorrichtung. Dann trifft die konzentrierte Solarenergie auf das optisch transparente Medium der ersten Schicht 38 des parabolzylindrischen Lichtleiter-Konzentrators 36. Die Schicht ist aus chemisch reinem Quarzglas hergestellt. Der parabolische Querschnitt des parabolzylindrischen Lichtleiter-Konzentrators befindet sich innerhalb des Brennflecks. Das Medium der zweiten Schicht 39 (Ummantelung) des parabolzylindrischen Lichtleiter-Konzentrators 36 ist ebenfalls aus Quarzglas aber mit geringerem Brechungsindex hergestellt und lenkt das Licht entlang der überlagerten Focusachsen innerhalb des parabolzylindrischen Lichtleiter-Konzentrators. Die Dicke der Schicht des ersten und des zweiten Mediums wird gemäß dem Gesetz für die totale interne Reflexion definiert, da das Medium, wenn sich die Oberflächenwelle bildet, Energie streuen und extrahieren kann. Diese Medien können aus Acrylglas hergestellt seien, das ultraviolette Strahlung überträgt. Die obere Oberfläche des parabolischen Zylinders ist mit dem reflektierenden und schützenden Material bedeckt.

Am Endpunkt des parabolzylindrischen Lichtleiter-Konzentrators 36 ändert sich der parabolische Querschnitt in einen kreisförmigen Querschnitt entlang dem Lichtstrom, und der Lichtleiter-Konzentrator geht in einen Lichtleiter über, der die Solarenergie zu dem Wärmeaufnehmer überträgt.

Das vorgeschlagene Verfahren und die Vorrichtung funktionieren gemäß dem folgenden Ablauf:
Der zylindrische parabolische Konzentrator für Sonnenenergie der ersten Stufe mit der Vorrichtung zur Sonnennachführung 2 wird von Süd nach Nord ausgerichtet. Abhängig vom Breitengrad wird der Richtungswinkel so gewählt, dass der Lichtstrom vollständig rechtwinklig zu der Oberfläche des parabolzylindrischen Konzentrators ist. Um einen Einfallswinkel einzustellen, der dem maximalen Einfallswinkel entspricht, um eine totale interne Brechung in dem parabolzylindrischen LichtleiterKonzentrator 36 zu erreichen, sollte ein Winkel, der sich auf die Vorrichtung zur Sonnennachführung bezieht, geändert werden. Dies sollte in einer Weise getan werden, dass der Lichtstrom, der vom parabolzylindrischen Konzentrator für Sonnenenergie der ersten Stufe reflektiert wird, auf den parabolzylindrischen Lichtleiter-Konzentrator 36 unter einem maximalen Winkel trifft. Der zylindrische parabolische Konzentrator für Sonnenenergie der ersten Stufe sammelt die Solarenergie in seinem Focus f. Wenn die Focusachsen beider Konzentratoren überlagert werden, dienen sie als Lichtquelle für den zylindrischen Lichtleiter-Konzentrator 36, die die Richtung des Lichtstroms ändern, wenn sie gebeugt wird, und lenkt den Lichtstrom parallel zu den Fokusachsen aus. Die Solarenergie wird über die gesamte Länge des parabolzylindrischen Konzentrators der ersten Stufe gesammelt. Gleichzeitig wird sie in dem parabolischen Lichtleiter-Konzentrator 36 gebeugt und ändert ihre Richtung innerhalb des parabolischen Querschnitts. Die in dem parabolzylindrischen Lichtleiter-Konzentrator gesammelte Energie erreicht ihre maximale Intensität an dem Ausgang des zylindrischen Lichtleiter-Konzentrators 36 und verbreitet sich durch den Lichtleiter mit zirkulärem Querschnitt.

Offenbart wird ein Verfahren zur Konzentrierung von Sonnenenergie, das die Reflexion des Lichtstroms und die Konzentration durch den Wärmeabnehmer einschließt, dadurch gekennzeichnet, dass der Lichtstrom der Solarenergie, der in der ersten Stufe über die Focusachse des parabolzylindrischen Konzentrators konzentriert wird, in einem Winkel auf den parabolzylindrischen Lichtleiter-Konzentrator gerichtet wird, der eine totale interne Brechung ermöglicht. Der zylindrische parabolische Lichtleiter-Konzentrator ist aus optisch transparenten Materialien hergestellt. Die Focusachsen des Konzentrators der ersten Stufe und des Lichtleiter-Konzentrators werden überlagert. Diese Achse erschafft eine Quelle konzentrierter Solarstrahlung für den parabolzylindrischen Lichtleiter-Konzentrator. Wenn diese Solarstrahlung auf die Oberfläche des parabolischen Lichtleiter-Konzentrators unter dem maximalen Winkel trifft, wird diese gebeugt und läuft parallel zu den Focusachsen entlang der Oberfläche der zwei Medien mit unterschiedlichen Dichten. Sie wird auch in Richtung des Lichtstroms über die gesamte Länge des parabolzylindrischen Lichtleiter-Konzentrators aufsummiert und nachfolgend auf einen Energieempfänger übertragen.

Offenbart wird ferner eine Vorrichtung für die Konzentrierung von Solarenergie, bestehend aus einem parabolzylindrischen Konzentrator der ersten Stufe mit softwaregesteuerter Sonnennachführung und einem parabolzylindrischen Absorber mit Wärmeempfänger, gekennzeichnet durch das Vorliegen eines optisch transparenten parabolzylindrischen Lichtleiter-Konzentrators. Die Focusachse dieses Lichtleiter-Konzentrators wird mit dem Focus des parabolzylindrischen Konzentrators der ersten Stufe überlagert. Der Lichtleiter-Konzentrator ist hergestellt aus einem optisch transparenten doppelschichtigen dielektrischen Material mit unterschiedlichen Brechungskoeffizienten. Das erste Medium, das den Lichtftuss aus dem parabolzylindrischen Konzentrator der ersten Stufe aufnimmt, ist dichter als das Medium der zweiten Schicht. Die Dicke der zweiten Schicht ist größer als die der ersten Mediumschicht. Der zylindrische parabolische Lichtleiter ist außen auf der Oberfläche mit einer reflektierenden und schützenden Schicht bedeckt. Die Solarenergie, gesammelt in dem parabolzylindrischen Lichtleiter-Konzentrator, wird zu einem Lichtleiter mit kreisförmigem Durchschnitt geleitet und an den Solarenergieempfänger übertragen.

## Patentansprüche

1. Vorrichtung zur Pyrolyse von festen Abfällen mit Sonnenenergie bei 1500 - 1600 °C, umfassend
a) einen Drehofen in einem leckdichten Aufnahmegehäuse,
b) eine Vorrichtung zum kontinuierlichen Zuführen von Abfall in den Drehofen an einem ersten Ende des Drehofens, wobei die Vorrichtung zum kontinuierlichen Zuführen von Abfall in den Drehofen die Zufuhr von Sauerstoff unterbindet,
c) eine Drainagevorrichtung am zweiten Ende des Drehofens zum Entfernen des zersetzten Abfalls, die zu einem Präzipitationstank führt,
d) ein Gasentzugssystem im Aufnahmegehäuse, das mit dem Präzipitationstank durch eine Leitung verbunden ist und
e) einen Lichtleiter, der Sonnenstrahlung in den Drehofen am zweiten Ende des Drehofens einführt.

2. Vorrichtung nach Anspruch 1
**dadurch gekennzeichnet,**
**dass** die Vorrichtung zum kontinuierlichen Zuführen von Abfall in den Drehofen eine Schnecke ist, die den zugeführten Abfall während des Transportvorgangs zu einem luftundurchlässigen Pfropfen verdichtet, insbesondere eine Schnecke mit diskontinuierlichen Schaufeln.

3. Vorrichtung nach Anspruch 1 und 2,
**dadurch gekennzeichnet,**
**dass** der Drehofen eine hitzefeste Beschichtung und/oder eine Infrarotstrahlung reflektierende Schicht enthält.

4. Vorrichtung nach Anspruch 3,
**dadurch gekennzeichnet,**
**dass** das Innere des Drehofens von innen nach außen eine Schicht aus feuerfestem Stein, eine Schicht aus einem Hochtemperatur-Isoliermaterial und eine Schicht aus poliertem, Infrarotstrahlen reflektierendem, rostfreiem Strahl enthält.

5. Vorrichtung nach Anspruch 1 bis 4,
**dadurch gekennzeichnet,**
**dass** der Drehofen zwei gegenüberliegende Drainageöffnungen aufweist.

6. Vorrichtung nach Anspruch 1 bis 5,
**dadurch gekennzeichnet,**
**dass** die Vorrichtung zusätzlich eine Bank von Sonnenkollektoren enthält, die über den Lichtleiter Solarstrahlung in den Drehofen führen.

7. Vorrichtung nach Anspruch 6,
**dadurch gekennzeichnet,**
**dass** die Sonnenkollektoren jeweils zwei Stufen von parabolzylindrischen Konzentratoren enthalten, wobei die erste Stufe einen parabolzylindrischen Konzentrator für die Aufnahme des Sonnenlichts enthält und die zweite Stufe ein parabolzylindrischer Lichtleiter-Konzentrator ist, der das in der ersten Stufe konzentrierte Licht aufnimmt.

8. Vorrichtung nach Anspruch 7,
**dadurch gekennzeichnet,**
**dass** die Konzentratoren der ersten und zweiten Stufe so angeordnet sind, dass die Focusachsen der Konzentratoren der ersten und zweiten Stufe zur Deckung gebracht sind.

9. Vorrichtung nach einem der Ansprüche 7 oder 8,
**dadurch gekennzeichnet,**
**dass** der zylindrische parabolische Lichtleiter-Konzentrator aus zwei optisch transparenten Materialien mit verschiedenen Brechungskoeffizienten n₁ und n₂ besteht, mit der Maßgabe, dass n₁ > n₂ ist.

10. Verfahren zur Pyrolyse von festen Abfällen mit Sonnenenergie in einem sich drehenden Drehofen, enthalten in einem leckdichten Aufnahmegehäuse, in einem kontinuierlichen Prozess umfassend die Schritte:
a) Beschicken des Drehofens mit Abfall aus einem Silo über eine Zuführvorrichtung, die den Zutritt von Sauerstoff in den Ofen unterbindet,
b) Eintreten von konzentrierter Sonnenstrahlung in den Drehofen, die den Abfall auf 1500 - 1600 °C in Abwesenheit von Sauerstoff erhitzt und dadurch zur Pyrolyse des Abfalls und zur Freisetzung von Pyrogas führt,
c) Abführen des pyrolysierten Abfalls als geschmolzene Schlacke in einen Präzipitationsbehälter und
d) Abführen des Pyrogases über ein Gasentzugssystem im leckdichten Aufnahmegehäuse und Hineinpumpen des Pyrogases in die geschmolzene Schlacke.

11. Verfahren nach Anspruch 10,
**dadurch gekennzeichnet,**
**dass** Sonnenstrahlung sowohl das Spektrum des sichtbaren Lichts als auch des Infrarotlichts umfasst.

12. Verfahren nach einem der Ansprüche 10 oder 11,
**dadurch gekennzeichnet,**
**dass** der Abfall Haushaltsabfall oder organischen Abfall umfasst.

13. Verfahren nach den Ansprüchen 10 bis 12,
**dadurch gekennzeichnet,**
**dass** der Abfall feucht ist.

14. Verfahren nach den Ansprüchen 10 bis 13,
**dadurch gekennzeichnet,**
**dass** das erzeugte Pyrogas in Kraftwerken ohne Abgabe schädlicher Gase verbrannt wird.

15. Verfahren nach den Ansprüchen 10 bis 14,
**dadurch gekennzeichnet,**
**dass** es in der Vorrichtung gemäß den Ansprüchen 1 bis 9 durchgeführt wird.

## Claims

1. Device for the pyrolysis of solid wastes using solar energy at 1500 to 1600 °C. comprising
a) a rotary kiln in a leak-proof receptacle housing.
b) a device for the continuous feeding of waste into the rotary kiln at a first end of the rotary kiln, wherein the device for continuously supplying waste into the rotary kiln inhibits the supply of oxygen,
c) a drainage device at the second end of the rotary kiln for removal of the decomposed waste, which leads to a precipitation tank,
d) a gas withdrawal system in the receptacle housing, which is connected with the precipitation tank through a pipe, and
e) an optical fibre to guide the solar radiation into the rotary kiln at the second end of the rotary kiln.

2. Device according to claim 1, **characterised in that** the device for continuously supplying waste into the rotary kiln is a screw which compresses the supplied waste during the transfer operation into an air-impermeable plug, particularly a screw having discontinuous blades.

3. Device according to claim 1 and 2, **characterised in that** the rotary kiln comprises a heat-resistant coating and/or an infrared radiation reflecting layer.

4. Device according to claim 3, **characterised in that** the interior of the rotary kiln from the inside outwards comprises a layer of refractory stone, a layer of high-temperature insulation and a layer of polished, infrared radiation reflecting stainless steel.

5. Device according to claim 1 to 4, **characterised in that** the rotary kiln has two opposed drainage openings.

6. Device according to claim 1 to 5, **characterised in that** the device additionally comprises a bank of solar panels, which guide solar radiation into the rotary kiln via the optical fibre.

7. Device according to claim 6, **characterised in that** the solar panels each contain two stages of parabolic cylindrical concentrators, wherein the first stage includes a parabolic cylindrical concentrator for receiving the sunlight, while the second stage is a parabolic cylindrical light pipe concentrator which receives the light concentrated in the first stage.

8. Device according to claim 7, **characterised in that** the first and second stage concentrators are arranged so that the focus axes of the first and second stage concentrators are made to coincide.

9. Device according to one of the claims 7 or 8, **characterized in that** the cylindrical parabolic optical fibre concentrator is made of two optically transparent materials with different refractive indices n₁ and n₂ with the proviso that n₁ > n₂.

10. Process for the pyrolysis of solid wastes with solar energy in a rotating rotary kiln, contained in a leak-proof receptacle housing, in a continuous process comprising the steps of:
a) charging of the rotary kiln with waste from a silo via a feeder, which prevents the entry of oxygen into the furnace,
b) guiding of concentrated solar radiation into the rotary kiln, which heats the waste to 1500 - 1600 °C in the absence of oxygen, thus leading to pyrolysis of the waste and the release of pyro-gas,
c) conveying the pyrolyzed waste as molten slag into a precipitation vessel and
d) removing the pyro-gases via a gas withdrawal system into a leak-proof receptacle housing and pumping the pyro-gases into the molten slag.

11. Process according to claim 10, **characterised in that** the solar radiation comprises both the spectrum of visible light as well as that of infrared light.

12. Process according to any one of the claims 10 or 11, **characterised in** the waste comprises household waste or organic waste.

13. Process according to claims 10 to 12 **characterised in that** the waste is damp.

14. Process according to claims 10 to 13, **characterized in that** the produced pyrogas is burned in power plants without emission of harmful gases.

15. Process according to claims 10 to 14, **characterised in that** it is carried out in the device according to claims 1 to 9.

## Revendications

1. Dispositif pour la pyrolyse de déchets solides à l'aide d'énergie solaire à 1500-1600°C, comprenant :
a) un four rotatif dans une enceinte collectrice étanche aux fuites,
b) un dispositif pour l'amenée continue de déchets dans le four rotatif à une première extrémité du four rotatif, le dispositif d'amenée continue des déchets dans le four empêchant l'apport d'oxygène,
c) un dispositif de drainage à la deuxième extrémité du four rotatif pour éliminer les déchets décomposés, qui conduit à une cuve de précipitation,
d) un système de soutirage de gaz dans l'enceinte collectrice, qui est relié par l'intermédiaire d'une canalisation à la cuve de précipitation, et
e) un conduit de lumière, qui introduit un rayonnement solaire dans le four rotatif à la deuxième extrémité du four rotatif.

2. Dispositif selon la revendication 1, **caractérisé en ce que** le dispositif pour l'amenée continue de déchets dans le four rotatif est une vis sans fin, qui compacte les déchets amenés pendant l'opération de transport pour former un bouchon imperméable à l'air, en particulier une vis sans fin à ailettes discontinues.

3. Dispositif selon les revendications 1 et 2, **caractérisé en ce que** le four rotatif contient un revêtement résistant à la chaleur et/ou une couche réfléchissant le rayonnement infrarouge.

4. Dispositif selon la revendication 3, **caractérisé en ce que** l'intérieur du four rotatif contient, de l'intérieur vers l'extérieur, une couche de briques réfractaires, une couche en un matériau isolant à haute température et une couche en acier inoxydable, poli, réfléchissant les rayons infrarouges.

5. Dispositif selon les revendications 1 à 4, **caractérisé en ce que** le four rotatif comprend deux ouvertures de drainage opposées.

6. Dispositif selon les revendications 1 à 5, **caractérisé en ce que** le dispositif contient en outre une batterie de capteurs solaires, qui par le conduit de lumière conduisent le rayonnement solaire dans le four rotatif.

7. Dispositif selon la revendication 6, **caractérisé en ce que** les capteurs solaires contiennent chacun deux étages de concentrateurs parabolo-cylindriques, le premier étage contenant un concentrateur parabolo-cylindrique pour collecter la lumière solaire et le deuxième étage étant un concentrateur parabolo-cylindrique à conduit de lumière, qui collecte la lumière concentrée dans le premier étage.

8. Dispositif selon la revendication 7, **caractérisé en ce que** les concentrateurs du premier et du deuxième étage sont disposés de telle sorte que les axes focaux des concentrateurs du premier et du deuxième étage sont mis en alignement.

9. Dispositif selon l'une des revendications 7 ou 8, **caractérisé en ce que** le concentrateur parabolo-cylindrique à conduit de lumière est constitué de deux matériaux optiquement transparents ayant des indices de réfraction n₁ et n₂ différents, à la condition que n₁ > n₂.

10. Procédé de pyrolyse de déchets solides à l'aide d'énergie solaire dans un four rotatif tournant, contenus dans une enceinte collectrice étanche aux fuites, dans le cadre d'un procédé continu comprenant les étapes suivantes :
a) introduction dans le four rotatif de déchets provenant d'un silo, par un dispositif d'amenée qui empêche l'entrée d'oxygène dans le four,
b) introduction d'un rayonnement solaire concentré dans le four rotatif, qui chauffe les déchets à 1500-1600°C en l'absence d'oxygène, et de ce fait conduit à la pyrolyse des déchets et à la libération d'un gaz de pyrolyse,
c) évacuation des déchets pyrolysés sous forme d'un laitier fondu dans une cuve de précipitation, et
d) évacuation du gaz de pyrolyse par un système de soutirage de gaz dans l'enceinte collectrice étanche aux fuites, et introduction par pompage du gaz de pyrolyse dans le laitier fondu.

11. Procédé selon la revendication 10, **caractérisé en ce que** le rayonnement solaire englobe tant le spectre de la lumière visible que celui de la lumière infrarouge.

12. Procédé selon l'une des revendications 10 ou 11, **caractérisé en ce que** les déchets comprennent des déchets domestiques ou des déchets organiques.

13. Procédé selon les revendications 10 à 12, **caractérisé en ce que** les déchets sont humides.

14. Procédé selon les revendications 10 à 13, **caractérisé en ce que** le gaz de pyrolyse produit est brûlé dans des centrales sans émission de gaz toxiques.

15. Procédé selon les revendications 10 à 14, **caractérisé en ce qu'**il est mis en oeuvre dans le dispositif selon les revendications 1 à 9.
